# EUROPÄISCHE PATENTSCHRIFT

(11) **EP 0 364 705 B1**
(45) Veröffentlichungstag und Bekanntmachung des Hinweises auf die Patenterteilung: **13.10.1993**
(21) Anmeldenummer: 89116091.3
(22) Anmeldetag: 31.08.1989
(51) Int. Cl.: G01N 1/24

(54) **Luftförderer für Gasprüfröhrchen**
Air transportation device for a gas-sampling tube
Dispositif de transport de l'air pour tube d'échantillonnage de gaz

(30) Priorität: 21.10.1988 DE 3835885
(43) Veröffentlichungstag der Anmeldung: 25.04.1990
(73) Patentinhaber: AUERGESELLSCHAFT GMBH, D-12059 Berlin (DE)
(72) Erfinder: Dahrendorf, Klaus-Dieter, D-1000 Berlin 45 (DE); Noack, Ulrich, D-1000 Berlin 42 (DE)

(56) Entgegenhaltungen:
- DE-A- 3 330 578
- FR-A- 1 088 737
- US-A- 3 884 081
- SOVIET INVENTIONS ILLUSTRATED, Woche E42, 1. Dezember 1982, Nr. 8646E/42, Derwent Publications Ltd, London, GB; & SU-A-892 264

## Beschreibung

Die Erfindung betrifft einen Luftförderer für Gasprüfröhrchen zum Nachweis fremder Gase oder Schwebestoffe in Luft nach dem Oberbegriff des Patentanspruches 1.

Bei einem bekannten Luftförderer dieser Art ist um die Gerätekörperachse ein federbelasteter Zählring angeordnet, der durch eine Drehung die Steuerstange zum Auslösen des Saughubes des Faltenbalges entriegelt (DE 3330578 C2). Hierbei erfolgt die Arretierung der Steuerstange im Gerätekörper für beide Endstellungen mittels eines in der Steuerstange angeordneten und radial gerichteten federbelasteten Sperrnockens, der je nach der eingenommenen Endstellung in radiale Rastausnehmungen in der Wandung des Gerätekörpers einrastet, wobei für die Endstellung bei entlüftetem Faltenbalg der federbelastete Sperrnocken mit einem unterhalb des Zählringes angeordneten federbelasteten Sperrelement zusammenwirkt. Durch diese Art der Arretierung der Steuerstange können sich nachteilig Ungenauigkeiten für die Festlegung von Hubanfang und Hubende des Saugvorganges ergeben.

Der Erfindung liegt die Aufgabe zugrunde, einen Luftförderer der eingangs genannten Art so zu verbessern, daß eine eindeutige Festlegung von Hubanfang und Hubende für den Saugvorgang erreicht wird, um ein genaues reproduzierbares Hubvolumen zu gewährleisten.

Diese Aufgabe wird gemäß der Erfindung bei einem Luftförderer der eingangs genannten Art durch die kennzeichnenden Merkmale des Anspruchs 1 gelöst.

Die mit der Erfindung erzielten Vorteile bestehen insbesondere darin, daß die Arretierung und Auslösung für das Saugelement in einer Baugruppe zusammengefaßt ist, wodurch bei jedem Saughub eine gleiche Saugcharakteristik erreicht wird, was bedeutet, daß die Meßgenauigkeit erhöht wird.

Die Erfindung wird nachstehend anhand eines Ausführungsbeispiels in der Zeichnung dargestellt und im folgenden näher beschrieben.
Es zeigt:
- Fig. 1: einen Längsschnitt durch einen Luftförderer im belüfteten Zustand des Faltenbalges (der Luftförderer ist enspannt, d.h. am Ende der Saugposition).
- Fig. 2: einen Längsschnitt durch den Luftförderer im entlüfteten zustand des Faltenbalges (der Luftförderer ist gespannt, d.h. am Anfang der Saugposition).
- Fig. 3: einen teilweise Längsschnitt durch den Luftförderer im Bereich des Gaskanals.
- Fig. 4: eine Draufsicht auf den Luftförderer.
- Fig. 5: eine Darstellung der arretierten Steuerstange des Luftförderers nach Fig. 2 mittels einer erfindungsgemäßen Arretier- und Auslöseeinrichtung am Anfang der Saugposition des Luftförderers.
- Fig. 6: eine Darstellung der ausgelösten Steuerstange zur Durchführung des Saugvorganges des Luftförderers.
- Fig. 7: eine Darstellung der arretierten Steuerstange des Luftförderers nach Fig. 1 am Ende der Saugposition, und
- Fig. 8: einen Schnitt durch die Arretier- und Auslöseeinrichtung.

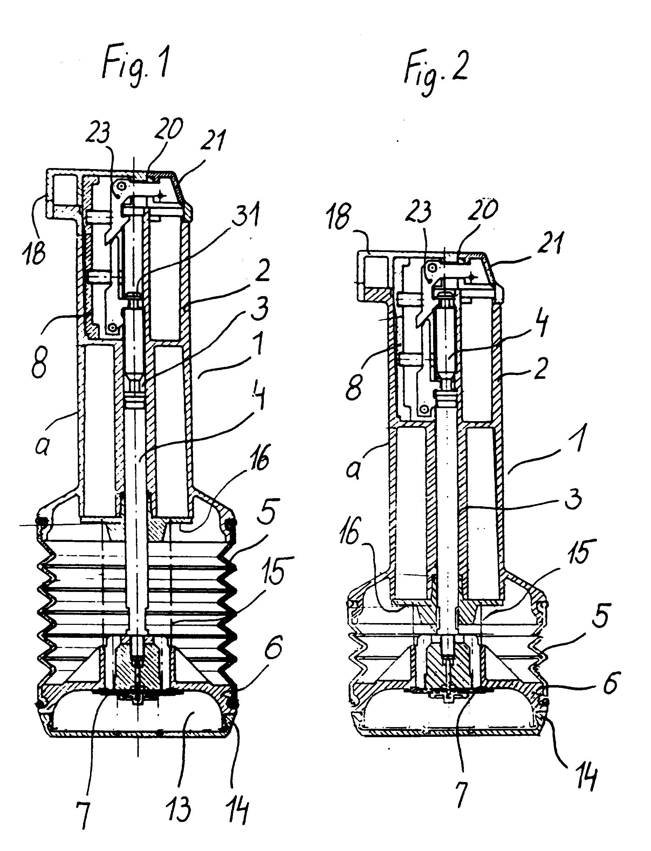

Wie aus Fig. 1 ersichtlich ist, besteht der Luftförderer 1 im wesentlichen aus einem Gerätekörper 2 mit einem in diesem konzentrisch angeordneten Durchgangskanal 3, einer Steuerstange 4, die in dem Durchgangskanal 3 formschlüssig bzw. gleitbar geführt wird, einem als Faltenbalg 5 ausgebildeten Saugelement, einem Kolben 6, der mit der Steuerstange 4 fest verbunden ist und einem am Kolben 6 angeordneten Luftauslaßventil 7 sowie einer Arretier- und Auslöseeinrichtung 8 zum Arretieren und Auslösen der Steuerstange 4.

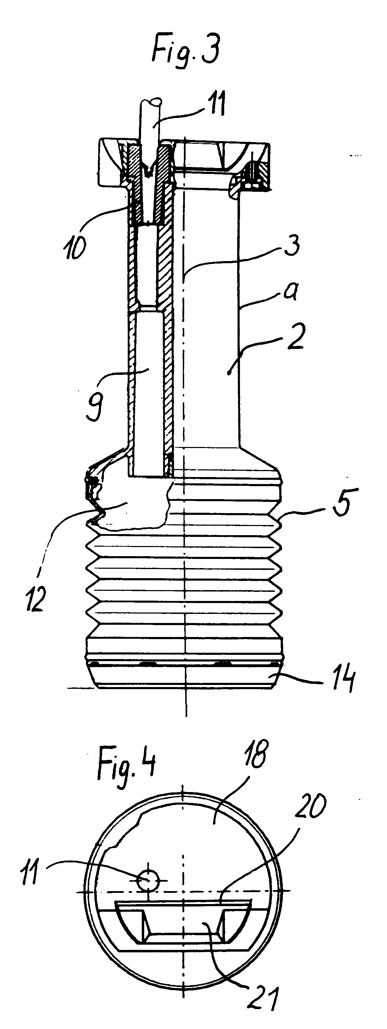

Parallel zum Durchgangskanal 3 und exzentrisch zum Gerätekörper 2 erstreckt sich über dessen gesamte Länge ein sogenannter Gaskanal 9, der an seinem einen Ende einen Dichteinsatz 10 aus gummielastischem Material zur steckbaren Aufnahme eines Gasprüfröhrchens 11 aufweist, und mit seinem anderen Ende in Verbindung mit dem Innenraum 12 des Faltenbalges 5 steht (vergleiche Fig. 3). Auf diese Weise wird das zu untersuchende Gas durch das Gasprüfröhrchen 11 mittels des als Saugelement wirkenden Faltenbalges 5 gesaugt. Der Faltenbalg 5 besteht aus gummielastischem Material und ist mit seinem einen Ende am Gerätekörper 2 und mit seinem anderen Ende an dem mit der Steuerstange 4 verbundenen Kolben 6 festangeflanscht. An der einen Hohlraum 13 bildenden Außenseite des Kolbens 6 ist das Luftauslaßventil 7 angeordnet, welches mit dem Innenraum 12 des Faltenbalges 6 strömungstechnisch in Wirkverbindung steht. Das Luftauslaßventil 7 dient zum Ausblasen der Luft beim Zusammendrücken des Faltenbalges 5 und ist bei einem Saughub des Faltenbalges 5 geschlossen. Der Hohlraum 13 des Kolbens 6 ist von einem Deckel 14 abgedeckt. Um die Steuerstange 4 herum erstreckt sich innerhalb des Faltenbalges 5 eine zylindrische Druckfeder 15, die sich am Kolben 6 und der diesem gegenüberliegenden Stirnfläche 16 des Gerätekörpers 2 abstützt. Der Faltenbalg 5 ist im Querschnitt kreisförmig ausgebildet und sein Durchmesser entspricht im wesentlichen dem Durchmesser der an den Faltenbalg 5 angeflanschten Gerätekörpers 2. Der Gerätekörper 2 ist oberhalb des Faltenbalges 5 als ein Handgriffstück a zum Umfassen mit einer Hand ausgebildet, wobei als Abschluß ein sogenanntes Kopfstück 17 angeformt ist, in das die Arretier- und Auslöseeinrichtung 8 für die Steuerstange 4 eingesetzt ist. Über das Kopfstück 17 ist als Abschluß eine Kappe 18 unverlierbar aufgesetzt, wobei in der Kappe 18 eine mit dem Dichteinsatz 10 korrespondierende Öffnung 19 zur Aufnahme des Gasprüfröhrchens 11 (vergleiche Figur 3 und 4) und ein Ausschnitt 20 zur Aufnahme einer Drucktaste 21 eingearbeitet ist (vergleiche Figur 1, 2 und 4). Die Drucktaste 21 ist Bestandteil der Arretier- und Auslöseeinrichtung 8.

Wie insbesondere aus Fig. 8 zu entnehmen ist, besteht die Arretier-und Auslöseeinrichtung 8 aus einem Einsatzstück 22 als Träger für einen Rasthebel 23 und einen Schwenkhebel 24, die beide mit der Steuerstange 4 beim Vorgang des Be- und Entlüftens des Faltenbalges 5 zusammenwirken und die Steuerstange 4 aus einer Ausgangsposition in die andere auslösen und / oder arretieren. Der winkelförmig ausgebildete Rasthebel 23 ist mittels eines Bolzens 25 im Einsatzstück 22 gegen die Kraft einer Feder 26 drehbar gelagert, wobei die aus dem Einsatzstück 22 herausragende Schenkelseite mit der Drucktaste 21 versehen ist, und die andere Schenkelseite einen nach außen herausstehenden Haken 27 aufweist. Der stabförmig ausgebildete Schwenkhebel 24 ist in Richtung seiner Längsachse senkrecht unterhalb des Rasthebels 23 angeordnet und mit seinem unteren Ende mittels eines Bolzens 29 im Einsatzstück 22 drehbar gegen die Kraft einer Feder 30 gelagert, wobei der Schwenkhebel 24 mit seinem freien Ende in Wirkkontakt mit der den Haken 27 aufweisenden Schenkelseite des Rasthebels 23 steht. Der Schwenkhebel 24 weist einen nach außen aus dem Einsatzstück 22 herausstehenden Haken 28 auf. Die Arretier-und Auslöseeinrichtung 8 wird bei vom Kopfstück 17 abgenommener Kappe 18 in das Kopfstück 17 und teilweise in den Gerätekörper 2 fest eingesetzt, wobei die drehbar gelagerten Rast- und Schwenkhebel 23, 24 mit ihren Hakenteilen 27 28 in Wirkkontakt mit der im Durchgangskanal 3 gleitbar geführten Steuerstange 4 stehen.

Nachfolgend wird der Funktionsablauf des Luftförderers 1 für Gasprüfröhrchen 11 beschrieben.

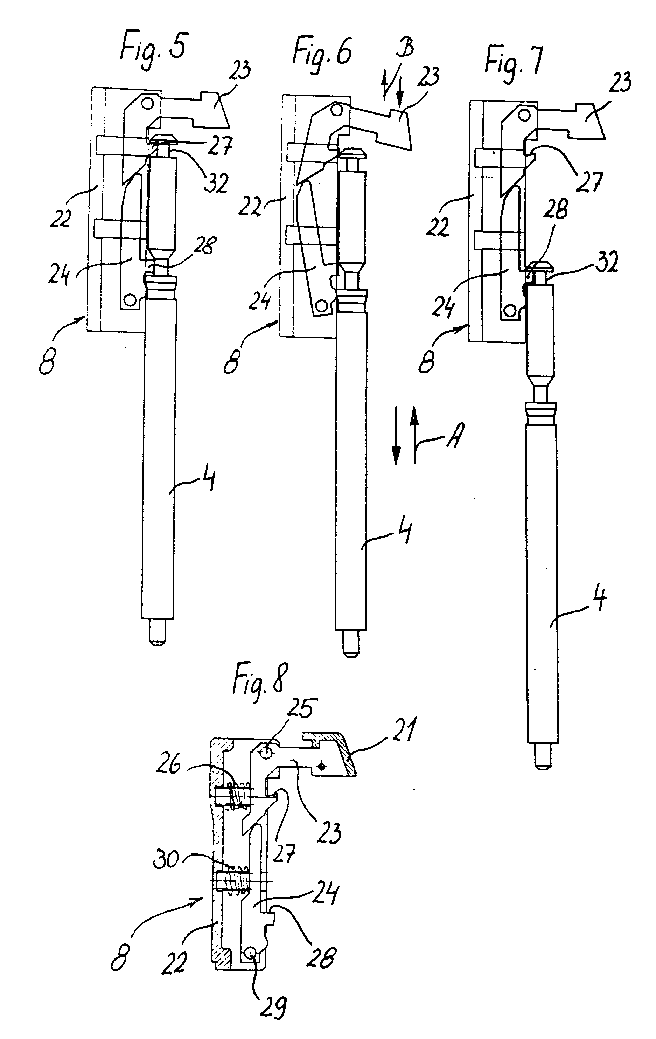

Die Figuren 5, 6 und 7 zeigen die Wirkungsweise der Arretier-und Auslöseeinrichtung 8 mit der Steuerstange 4, und zwar: am Anfang der Saugposition (Fig. 5), wobei der Luftförderer 1 gespannt ist, in einer auslösenden Position der Einrichtung 8 zur Durchführung des Saugvorganges (Fig. 6) und am Ende der Saugposition, wobei der Luftförderer 1 entspannt ist (Fig. 7).

In der Ausgangsstellung am Ende eines Saugvorganges des Luftförderers 1 ist der Faltenbalg voll belüftet (Fig. 1, 3 und 7). In dem Dichteinsatz 10 ist ein Gasprüfröhrchen 11 eingesetzt (Fig. 3). Der als Handgriff ausgebildete Gerätekörper 2 wird von der Bedienungsperson in eine Hand genommen und gegen eine feste Unterlage oder den Oberschenkel der Bedienungsperson mit dem Deckel 14 des Kolbens 6 mit Faltenbalg 5 und Druckfeder 15 gedrückt, woraufhin die Luft im Faltenbalg 5 durch das Luftauslaßventil 7 in den Hohlraum 13 entweicht und der Faltenbalg 5 auf diese Weise entlüftet wird. Hierbei bewegt sich der Gerätekörper 2 mit der Arretier- und Auslöseeinrichtung 8 gegen die Druckfeder 15 im Faltenbalg 5 an der im Durchgangskanal 3 gleitenden Steuerstange 4 nach unten, bis die Arretier- und Auslöseeinrichtung 8 mit ihrem federbelasteten Haken 27 des Rasthebels 23 in die Einkerbung 32 der Steuerstange 4 unverlierbar einrastet und somit die genaue Endstellung für die vollständige Entlüftung des Faltenbalges 5 festlegt und gewährleistet, daß dadurch die Saugfördermenge des Luftförderers 1 bei jedem Betätigungshub immer gleichmäßig ist. Denn jeder durchgeführte Saughub muß stets dem vollen Saugvolumen des vollständig entlüfteten Faltenbalges 5 entsprechen, damit jederzeit ein genaues und reproduzierbares Gasvolumen durch ein Gasprüfröhrchen durchgesaugt wird.

Zum Auslösen des Saughubes des Faltenbalges 5 wird die Drucktaste 21 niedergedrückt. Hierbei bewegt sich der Rasthebel 23 mit seinem Haken 27 aus der Einkerbung 32 der unter Federdruck der Druckfeder 15 stehenden Steuerstange 4, die dadurch entriegelt und freigegeben wird und mit dem Faltenbalg 5 einen Saughub ausführt und ein definiertes Prüfvolumen durch das aufgesteckte Gasprüfröhrchen 11 hindurchzieht. Während des Saugvorganges wird die Drucktaste in der unteren Position gehalten und erst dann wieder freigegeben, wenn der Schwenkhebel 24 mit seinem Haken 28 am Ende des Saughubes in die Eindrehung 32 der Steuerstange 4 einrastet und diese sperrt. Durch das Hochspringen der abgefederten Taste wird das Ende des Saughubes schlagartig sichtbar und fühlbar angezeigt.

## Patentansprüche

1. Luftförderer (1) für Gasprüfröhrchen (11) zum Nachweis fremder Gase oder Schwebestoffe in Luft, bestehend aus
- einem Gerätekörper (2) als Handgriff mit einem Durchgangskanal (3)
- einem am unteren Ende des Gerätekörpers angeordneten Faltenbalg (5), der ein Luftauslaßventil (7) aufweist und als Saugelement dient
- einer im Durchgangskanal geführten und arretierbaren Steuerstange (4), die über einen Kolben (6) mit dem Faltenbalg verbunden ist
- einer innerhalb des Faltenbalges angeordneten Druckfeder (15), die sich am Gerätekörper und dem Kolben abstützt
- einem am oberen Ende des Gerätekörpers angeordneten Dichteinsatz (10) zur steckbaren Aufnahme des Gasprüfröhrchens
- einem Gaskanal (9), der an seinem oberen Ende den Dichteinsatz aufweist und mit seinem unteren Ende mit dem Innenraum des Faltenbalges in Verbindung steht
gekennzeichnet durch:
- eine Einkerbung (32) am freien Ende der Steuerstange
- einen parallel zur Steuerstange angeordneten federbelasteten Rasthebel (23) mit einem Haken (27), der bei vollständiger Entlüftung des Faltenbalges in die Einkerbung einrasten kann
- eine Drucktaste (21) am Rasthebel zum Entriegeln der Steuerstange, wodurch ein Saughub des Faltenbalges ausgelöst werden kann
- einen parallel zur Steuerstange unterhalb des Rasthebels angeordneten federbelasteten Schwenkhebel (24) mit einem Haken (28), der nach Beendigung eines Saughubes in die Einkerbung der Steuerstange einrasten kann.

2. Luftförderer nach Anspruch 1, dadurch gekennzeichnet, daß der Rasthebel (23) winkelförmig und der Schwenkhebel (24) stabförmig ausgebildet ist, und beide Teile als ein Bauelement in einem Einsatzstück (22) dreh- und schwenkbar angeordnet sind.

3. Luftförderer nach Anspruch 1 oder 2, dadurch gekennzeichnet, daß der Rasthebel (23) mittels eines Bolzens (25) im Einsatzstück (22) gegen die Kraft einer Feder (26) drehbar gelagert ist, wobei die an dem Einsatzstück (22) herausragende Schenkelseite mit der Drucktaste (21) versehen ist, und die andere Schenkelseite den nach außen herausstehenden Haken (27) aufweist.

4. Luftförderer nach einem der Ansprüche 1 bis 3, dadurch gekennzeichnet, daß der Schwenkhebel (24) in Richtung seiner Längsachse unterhalb des Rasthebels (23) angeordnet und mit seinem unteren Ende mittels eines Bolzens (29) im Einsatzstück (22) drehbar gegen die Kraft einer Feder (30) gelagert ist, wobei der Schwenkhebel (24) mit seinem freien Ende an der den Haken (27) aufweisenden Schenkelseite des Rasthebels (23) anliegt.

5. Luftförderer nach einem der Ansprüche 1 bis 4, dadurch gekennzeichnet, daß oberhalb des als Handgriffstück (a) ausgebildeten Gerätekörpers (2) als Abschluß ein Kopfstück (17) angeformt ist, in das das Einsatzstück (22) als Arretier- und Auslöseeinrichtung (8) für die Steuerstange (4) einsetzbar ist.

6. Luftförderer nach einem der Ansprüche 1 bis 5, dadurch gekennzeichnet, daß parallel zum Durchgangskanal (3) und exzentrisch im Gerätekörper (2) über dessen gesamte Länge sich ein Gaskanal (9) erstreckt, der an seinem einen Ende einen Dichteinsatz (10) aus gummielastischem Material zur steckbaren Aufnahme des Gasprüfröhrchens (11) aufweist und der mit seinem anderen Ende mit dem Innenraum (12) des Faltenbalges (5) in Verbindung steht.

7. Luftförderer nach einem der Ansprüche 1, 5 oder 6, dadurch gekennzeichnet, daß über das Kopfstück (17) als Abschluß eine Kappe (18) angeordnet ist, wobei in der Kappe (18) eine mit dem Dichteinsatz (10) korrespondierende Öffnung (19) zur Aufnahme des Gasprüfröhrchens (11) und ein Ausschnitt (20) zur Aufnahme der Drucktaste (21) eingearbeitet ist.

8. Luftförderer nach Anspruch 1, dadurch gekennzeichnet, daß die Steuerstange in einem vorgegebenen Abstand von der Einkerbung (32) zur Arretierung der Steuerstange (4) mit einer weiteren Einkerbung (33) versehen ist, in die bei entlüftetem Faltenbalg (5) der aus der Arretier- und Auslöseeinrichtung (8) herausragende Haken (27) des Hebels (24) angeordnet ist.

9. Luftförderer nach einem der Ansprüche 1 bis 8, dadurch gekennzeichnet, daß das wechselseitige Eingreifen der Haken (27, 28) der Hebel (23, 24) in die Einkerbung (32) der Steuerstange (4) jeweils die beiden Endstellungen des Be- und Entlüftens des Faltenbalges (5) festlegt.

10. Luftförderer nach einem der Ansprüche 1 bis 9, dadurch gekennzeichnet, daß durch das Hochspringen der abgefederten Drucktaste (21) das Ende des Saughubes schlagartig sichtbar und fühlbar ist.

## Claims

1. Air conveyor (1) for small gas sampling tubes (11) for detection of foreign gases or matter suspended in air, consisting of
- an apparatus body (2) as a handle with a through duct (3)
- a bellows (5) arranged on the lower end of the apparatus body which has an air outlet valve (7) and serves as a suction member
- a control stick (4) which can be guided and locked in the through duct, which is connected by means of a piston (6) to the bellows
- a pressure spring (15) arranged within the bellows which is supported on the apparatus body and the piston
- a sealing insert (10) arranged on the upper end of the apparatus body to receive the small gas sampling tube as a plug
- a gas duct (9) which has the sealing insert on its upper end and at its lower end is connected to the interior of the bellows
characterised by:
- a notch (32) at the free end of the control stick
- a spring loaded rest lever arranged parallel to the control stick with a hook (27) which can engage the notch upon complete deflation of the bellows
- a push-button (21) on the rest lever for unlatching the control stick whereby a suction lift of the bellows can be released
- a spring loaded pivot lever (24) arranged parallel to the control stick below the rest lever with a hook (28) which can engage the notch after a suction lift is completed.

2. Air conveyor according to claim 1, characterised in that the rest lever (23) is angular and the pivot lever (24) is rod shaped and both parts are arranged so as to be rotatable and pivotal as one component in an insert member (22).

3. Air conveyor according to claim 1 or 2, characterised in that the rest lever (23) is positioned to rotate against the force of a spring (26) by means of a bolt (25) in the insert member (22), whereby the shank side protruding on the insert member (22) is provided with the push-button (21) and the other shank side has the outwardly projecting hook (27).

4. Air conveyor according to one of claims 1 to 3 characterised in that the pivot lever (24) is arranged in the direction of its longitudinal axis below the rest lever (23) and is positioned to be rotatable against the force of a spring (30) at its lower end by means of a bolt (29) in the insert member (22), whereby the pivot lever (24) with its free end abuts the shank side of the rest lever (23) having the hook (27).

5. Air conveyor according to any one of claims 1 to 4, characterised in that above the apparatus body (2) formed as a handle piece (a) a head piece (17) is formed as a closure into which the insert piece can be fitted as a locking and release arrangement (8) for the control stick (4).

6. Air conveyor according to one of claims 1 to 5, characterised in that a gas duct (9) extends parallel to the through duct (3) and eccentric to, and over the entire length of the apparatus body (2), which gas duct (9) has on its end a sealing insert (10) made of India rubber material to receive the small gas sampling tube (11) as a plug and is connected at its other end to the interior (12) of the bellows (5).

7. Air conveyor according to one of claims 1,5 or 6 characterised in that a cap (18) is arranged over the head piece (17) as a closure whereby an opening (19) corresponding to the sealing insert (10) to receive the small gas sampling tube (11) and a section (20) to receive the pressure button (21) are incorporated in the cap (18).

8. Air conveyor according to claim 1, characterised in that the control stick is provided with a further notch (33) at a pre-set distance from the notch (32) to lock the control stick (4), in which further notch (33), when the bellows (5) is deflated, the hook (27) protruding from the locking and release arrangement (8) of the lever (24) is arranged.

9. Air conveyor according to one of claims 1 to 8 characterised in that the alternate engagement of the hooks (27,28) of the levers (23,24) in the notch (32) of the control rod (4) determines at any given time both the final positions of the inflation and deflation of the bellows (5).

10. Air conveyor according to one of claims 1 to 9, characterised in that the end of the suction lift is instantaneously visible and palpable by means of the high jumping of the spring loaded push-button (21).

## Revendications

1. Dispositif de transport d'air (1) pour des tubes d'échantillonnage de gaz (11) destinés à déceler des gaz étrangers et des matières en suspension dans l'air, constitué de :
- un corps d'appareil (2), sous forme de poignée pourvue d'un canal traversant (3),
- un soufflet (5), disposé à l'extrémité inférieure du corps d'appareil, qui présente une soupape d'évacuation d'air (7) et sert d'élément aspirant,
- une tige de commande (4), guidée avec possibilité de blocage dans le canal traversant, qui est reliée au soufflet par l'intermédiaire d'un piston (6),
- un ressort de pression (15), disposé à l'intérieur du soufflet, qui s'appuie contre le corps d'appareil et contre le piston,
- un insert d'étanchéité (10), disposé à l'extrémité supérieure du corps d'appareil, pour recevoir par emboîtement le tube d'échantillonnage de gaz,
- un canal de gaz (9), qui présente à son extrémité supérieure l'insert d'étanchéité et qui est relié par son extrémité inférieure à l'espace intérieur du soufflet,
**caractérisé** par :
- une encoche (32) à l'extrémité libre de la tige de commande,
- un levier à cran (23) sous charge de ressort, disposé parallèlement à la tige de commande et pourvu d'un crochet (27) pouvant s'enclencher dans l'encoche lorsque le soufflet est totalement vidé de son air,
- un bouton-poussoir (21) sur le levier à cran pour déverrouiller la tige de commande, ce qui permet de déclencher une course d'aspiration du soufflet,
- un levier pivotant (24) sous charge de ressort, disposé parallèlement à la tige de commande en dessous du levier à cran et pourvu d'un crochet (28) pouvant s'enclencher dans l'encoche de la tige de commande à la fin d'une course d'aspiration.

2. Dispositif de transport d'air selon la revendication 1, **caractérisé** en ce que le levier à cran (23) est coudé et le levier pivotant (24) en forme de barre, et les deux pièces sont disposées à rotation et pivotement dans une pièce d'insertion (22), afin de constituer un ensemble de construction.

3. Dispositif de transport d'air selon la revendication 1 ou 2, **caractérisé** en ce que le levier à cran (23) est, au moyen d'un pivot (25), monté à rotation contre la force d'un ressort (26) dans la pièce d'insertion (22), la branche faisant saillie hors de la pièce d'insertion (22) étant pourvue du bouton-poussoir (21), tandis que l'autre branche présente le crochet (27), qui fait saillie vers l'extérieur.

4. Dispositif de transport d'air selon l'une quelconque des revendications 1 à 3, **caractérisé** en ce que le levier pivotant (24) est disposé dans la direction de son axe longitudinal en dessous du levier à cran (23) et, par son extrémité inférieure et au moyen d'un pivot (29), est monté à rotation contre la force d'un ressort (30) dans la pièce d'insertion (22), le levier pivotant (24) s'appliquant par son extrémité libre contre la branche du levier à cran (23) qui présente le crochet (27).

5. Dispositif de transport d'air selon l'une quelconque des revendications 1 à 4, **caractérisé** en ce qu'est formée, comme élément de terminaison au-dessus du corps d'appareil (2) réalisé sous forme de poignée (a), une partie de tête (17) dans laquelle on peut installer la pièce d'insertion (22) comme mécanisme de blocage et de libération (8) pour la tige de commande (4).

6. Dispositif de transport d'air selon l'une quelconque des revendications 1 à 5, **caractérisé** en ce qu'un canal de gaz (9) s'étend sur toute la longueur du corps d'appareil (2) dans ce dernier, parallèlement au canal traversant (3) et en position excentrée, le canal de gaz (9) présentant, à une extrémité, un insert d'étanchéité (10) en gomme élastique pour recevoir par emboîtement le tube d'échantillonnage de gaz (11), et étant relié, par son autre extrémité, à l'espace intérieur (12) du soufflet (5).

7. Dispositif de transport d'air selon l'une quelconque des revendications 1, 5 ou 6, **caractérisé** en ce qu'un capuchon (18) est disposé comme élément de terminaison au-dessus de la partie de tête (17), une ouverture (19) correspondant avec l'insert d'étanchéité (10) étant pratiquée dans le capuchon (18) pour recevoir le tube d'échantillonnage de gaz (11), et une découpure (20) y étant pratiquée pour recevoir le bouton-poussoir (21).

8. Dispositif de transport d'air selon la revendication (1), **caractérisé** en ce que la tige de commande est dotée, à une distance prédéterminée de l'encoche (32) pour le blocage de la tige de commande (4), d'une autre encoche (33) dans laquelle est disposé, lorsque le soufflet (5) est vidé de son air, le crochet (27) du levier (24), crochet qui fait saillie hors du mécanisme de blocage et de libération (8).

9. Dispositif de transport d'air selon l'une quelconque des revendications 1 à 8, **caractérisé** en ce que l'engagement alternatif des crochets (27, 28) des leviers (23, 24) dans l'encoche (32) de la tige de commande (4), définit les deux positions finales de mise en air et de vidage de l'air du soufflet (5).

10. Dispositif de transport d'air selon l'une quelconque des revendications 1 à 9, **caractérisé** en ce que le brusque retour élastique du bouton-poussoir (21) rend visible et sensible la fin de la course d'aspiration.
